# EUROPEAN PATENT APPLICATION

(11) **EP 1 947 149 A1**
(43) Date of publication of application: **23.07.2008**
(21) Application number: 05774260.3
(22) Date of filing: 25.07.2005
(51) Int. Cl.: C09D 7/12

(54) **THINNER FOR WATER-BASED PAINTS**

(30) Priority: 30.07.2004 ES 200401888
(71) Applicant: TALLERES OMAR, S.L., 46960 Alacuas (ES)
(72) Inventor: MARTINEZ TORRES, Antonio, E-46960 ALDAYA (ES)
(74) Representative: Sanz-Bermell Martinez, Alejandro
(86) International application number: PCT/ES2005/070107
(87) International publication number: WO 2006/015997

(57) **Abstract**

Thinner for water paints, consisting of:
- a benzene derivative
- an alcohol
- water
specifically formed of:
Toluene from 15 to 75%
Alcohol from 15 to 75%
Osmotized or distilled water from 5 to 70%; the alcohol is methyl alcohol, ethyl alcohol or a mixture of both.

Also alternatively of methyl acetate, toluene, alkylbenzenes and methanol. The resulting compound has a greater particle size than undiluted paint, is not volatile and weighs more than air. The paint applied stands up to treatment with water paper, and has a drying time at least five times lower.

For application in making solvents for water paints.

## Description

The technical sector involved in this invention is that of water paints, these being the sort that form an opaque base which is intended to cover a surface evenly in very fine coats, applied by spraying, or in some cases by means of direct application with a brush, fine brush, roller or similar.

Mainly in the automobile sector, the paints used until recently were the so-called acrylic type. These paints had the advantage of only dissolving or being dissolved in acrylic solvents. These paints are later applied a layer of gloss varnish.

However, the use of acrylic paints is giving way to water paints, which are the ones which are diluted in a water base and thus involve fewer toxic emanations which means that the facilities for them require fewer safety requirements in view of emanations on one hand, as well as fire safety precautions on the other, as these paints are not as combustible as the ones previously used.

The problem with these paints, doubtlessly more ecological and free of the problems involved with acrylic paints, consists in the fact that:
Water paints require less spray gun pressure than acrylic ones, nevertheless both undergo great dispersion, blow off with air and have to be applied with high gun pressures for acrylic paint, and average pressure for water paint, to obtain an appropriate and even dispersion. The working distance thus depends on the spray gun pressure and is in any event greater than when the thinner proposed is used. Hence, the greater the distance the lower the accuracy in the application of paint.
Apart from this there is the matter of price. Through the fact of being required for use, or due to paying off a new technology, these paints have clearly higher prices than traditional ones. In fact, the thinner for these paints may reach 10% of their volume, meaning that for each litre of pure product 1.1 litres of applicable paint are obtained. If diluted any further the paint is dispersed and it loses its qualities.
Apart from this, and particularly in the matter of repairs, the paint does not have characteristics comparable to the previous acrylic sort. Once dry the acrylic ones could be very effectively sanded with water paper. Water paints do not allow this facility, which means that the whole part always has to be painted. In the case of the solution that this thinner enables, it will allow the possibility of restoring small bumps on a vehicle with no need to paint the whole part, also correcting any possible irregularities which might stem from applying the paint on small areas of sheet metal, since water paint is not eliminated when water paper treatment is applied. In fact, current water paints, 10% dissolved, entail the problem that when water paper is applied the whole coat of paint is eliminated. Hence water paint technique requires perfection in repairs, which is not always possible in every job, both if working in places that are difficult to access or involving curves or volumes which receive more paint in certain parts than others.
The fourth problem arises in the drying time as a situation which extends the use of the paint booth, making its use more expensive a.s water paints take approximately five times longer to dry than acrylic paints.

### Statement of the prior state of the art.

The evolution in the paint market from acrylic to water paints has been mentioned. The pigment in the paints, the opaque mass of particles which, after being extended on the surface area in question, manages to cover this surface evenly, is formed of particles of resin, dyes and microgel. The paints mix different types of resins with the pigments, whose result is, in acrylic paints, the formation of a compound which polymerises when it dries, so that the process cannot be made reversible. Water paints have a similar behaviour, with a polymerisation process through condensation stemming from the volatilisation of the particles of water and hydrogen present.

There is no known thinner whose characteristics are similar to the one covered in this invention. Neither are the effects of the chemical transformation produced on painting known, as apart from the advantage implied by being able to dilute the same paint in five times its volume of thinner, the diluted paint also has the characteristic of a very large size of sprayed particles, and is thus not volatile. The use of masks or treated atmospheres is not in fact required in a ventilated booth. The effect of this size of particle is that the impulsion pressure for spray painting is considerably less than for earlier water paint, and also the result of both characteristics means that the paint is not dispersed beyond the place where it is applied. This means that particularly for automobile paint, it is not necessary to cover more than a few centimetres around the part to be painted, with time savings in the preparation of the parts that have to be painted.

From the experiments made it can be stated that the effect of the thinner is to form a new compound formed of the paint and the thinner so that the particles of paint are reinforced without losing any chromatic richness, given greater weight, and a shorter drying time is achieved through combining these, at least five times lower than the same water paint without being treated with this thinner. Hence the paint particles treated with the thinner prior to its application take on a large size as compared with the water paints not treated with this thinner, and have greater weight than the air, without being volatile.

Explanation of the invention.

This invention is a thinner for water paints which has according to a mixture of commercial products:
- A compound formed of a benzene derivative such as toluene.
- At least one alcohol such as a methyl alcohol, and preferably a mixture of methyl alcohol and ethylic alcohol.
- Osmotized water or distilled water.

Specifically, this is obtained by mixing the following chemical components:
- methyl acetate
- toluene
- alkylbenzenes identified with m-xylene standard in methanol
- methanol
- osmotized water or distilled water

The proportions are relevant for obtaining a paint substrate with a composition such that fast-drying coats with the same pigmentation are formed.

The proportions are variable depending on the type of paint to which this is applied, so that the density of resins and other variable components in different types and qualities of paint may modify the proportion slightly.

According to one particular method of embodiment, these proportions of commercial components are:
Toluene from 15 to 75%
Alcohol from 15 to 75%
Osmotized water from 5 to 70%
And if this is obtained by means of the chemical formula,
Methyl acetate from 15 to 75%
Toluene from 10 to 50%
Alkylbenzenes from 2 to 15%
Methanol from 15 to 75%
Osmotized water from 5 to 70%

The solution put forward by this invention provides a valid response to the three problems stated. On one hand, it produces the effect of maximising the paint yield, so that :
- It is not dispersed when this is applied, as this practically fails to volatilise, generating less pollution, because the mixture obtained has greater relative weight than the acrylic sort, given the greater size of each particle projected out.
- The paint only reaches the area that is required to be painted.
- The compressed air pressure is considerably lower than in the other paints.
- It can be mixed up to 500% in the thinner, which, far from being expensive, minimises the price effect that the paint can have, in spite of having a price higher than other acrylic types.
- The drying time is the very minimum, at least five times lower than with water paints not treated with this thinner, and the paint has been totally dried in the booth in approximately five minutes, being able to be sanded without forfeiting any of the conditions of the paint, and prior to the application of the coat of gloss that these water paints require.
- Water paper can be used to sand it, meaning that once the paint is dry, the surface can be rectified without losing its quality, the base paint applied setting better into the surface on which it is applied than any of the water paints available. For this reason it stands up to treatment with water paper.

This thinner produces widespread dispersion of the paint particles so that each particle has a large size, greater than in water paints without using this thinner, not volatile, and heavier than air.

This thinner does not deteriorate with water paper treatment.

It also has the effect that the paint applied with this thinner has a drying time at least five times less than without applying the thinner.

### Example of a particular embodiment

Mixture of one part of paint with five parts of thinner, 45% osmotized water, 36% toluene and 19% alcohol. The mixture of these with the paint makes this disperse and creates the possibility of producing drying five times faster, with a polymerisation effect of its components, which can consequently be treated after drying with a water paper for going over the finished surfaces before applying the coat of lacquer which gives the gloss to the automobile body.

This is for industrial application in making thinners for water paints.

## Claims

1. Thinner for water paints, of the sort that consist of components able to be diluted in water, **characterised by** being formed of at least :
- a benzene derivative
- an alcohol
- water

2. Thinner for water paints, according to claim 1, **characterised in that** the compound consists of:
a toluene from 15 to 75%
an alcohol from 15 to 75%
osmotized or distilled water from 5 to 70%
so that separately, or preferably mixed, these are able to be applied on the paint prior to its application.

3. Thinner for water paints, according to the previous claim, **characterised in that** the alcohol is methyl alcohol, ethyl alcohol or a mixture of both.

4. Thinner for water paints, according to claim 1, **characterised in that** the compound consists of a mixture of:
methyl acetate from 15 to 75%
toluene from 10 to 50%
alkylbenzenes from 2 to 15%
methanol from 15 to 75%
osmotized water from 5 to 70%

5. Thinner for water paints, according to claim 1 and 2, **characterised in that** after applying said thinner the paint particles are of a large size in relation to water paints without thinner, it is not volatile and is heavier than air.

6. Thinner for water paints, according to claim 2 or 3, **characterised in that** the paint applied with said thinner stands up to treatment with water paper.

7. Thinner for water paints, according to claim 2 or 3, **characterised in that** the paint applied with said thinner has a drying time at least five times lower than without application of the thinner.
